# EUROPÄISCHE PATENTSCHRIFT

(11) **EP 2 734 350 B1**
(45) Veröffentlichungstag und Bekanntmachung des Hinweises auf die Patenterteilung: **26.08.2015**
(21) Anmeldenummer: 12740486.1
(22) Anmeldetag: 13.07.2012
(51) Int. Cl.: B29B 17/02, B29B 17/04

(54) **VERFAHREN ZUM ENTFERNEN VON VERUNREINIGUNGEN AUF KUNSTSTOFFSCHNIPSELN**
METHOD FOR REMOVING IMPURITIES FROM SHREDDED PLASTIC
PROCÉDÉ DE SUPPRESSION D'IMPURETÉS PRÉSENTES SUR DES COPEAUX DE MATIÈRE PLASTIQUE

(30) Priorität: 21.07.2011 DE 102011108161
(43) Veröffentlichungstag der Anmeldung: 28.05.2014
(73) Patentinhaber: CVP Clean Value Plastics GmbH, 21079 Hamburg (DE)
(72) Erfinder: HOFMANN, Michael, 20146 Hamburg (DE); GERCKE, Alexander, 23843 Bald Oldesloe (DE); WERMTER, Carsten, 20149 Hamburg (DE)
(74) Vertreter: Hauck Patentanwaltspartnerschaft mbB
(86) Internationale Anmeldenummer: PCT/EP2012/002943
(87) Internationale Veröffentlichungsnummer: WO 2013/010653

(56) Entgegenhaltungen:
- DE-A1-102004 024 791
- DE-B- 1 218 869
- JP-A- 2005 096 270
- US-B1- 6 238 267

## Beschreibung

Die Erfindung betrifft ein Verfahren zum Entfernen von Verunreinigungen auf Kunststoffschnipseln unter Verwendung einer Vorrichtung, die eine erste Reinigungsscheibe mit einer ersten Reinigungsfläche und eine zweite Reinigungsscheibe mit einer zweiten Reinigungsfläche umfasst, wobei die Reinigungsflächen einander gegenüberliegen und zwischen sich einen Reinigungsspalt begrenzen.

Kunststoffabfälle, beispielsweise PET-Getränkeflaschen, Blisterverpackungen aus PET (tiefgezogene PET-Folien), Kunststoffabfälle aus Polyolefinen oder ähnliches, müssen im Zuge eines Recyclings gereinigt werden. Dabei sind sehr hohe Qualitätsanforderungen zu erfüllen. Zulässige Verunreinigungen bewegen sich im ppm Bereich. Für die Reinigung werden die Kunststoffabfälle zunächst zu Kunststoffschnipseln, insbesondere sogenannten Kunststoffflakes, zerkleinert. Voraussetzung für den Reinigungsprozess und die kontinuierliche Beschickung einer Reinigungsanlage sind optimal vorzerkleinerte Kunststoffschnipsel. Insbesondere sollten die Kunststoffschnipsel möglichst gleichmäßig mit einem geringen Feinanteil erzeugt werden. Es ist bekannt, hierfür einen Schredder (Rotor mit Messern und Gegenmessern und Siebkorb) einzusetzen. Über den Lochdurchmesser in dem Siebkorb wird die erzeugte Flakegröße beeinflusst. Die Abtrennung von Metallen von den Kunststoffabfällen erfolgt in einer Vorsortierung mittels Magnet- und Wirbelstromabscheidern. Es ist Stand der Technik, dass vor der Zerkleinerung der Kunststoffabfälle eine Sortierung nach Farben und/oder Kunststoffarten erfolgt. Dies ist aufgrund der Verschmutzung der Kunststoffabfälle jedoch mit Einschränkungen verbunden, da die Erkennungsrate bei verschmutzen Stoffen geringer als bei sauberen ist. Weiterhin müssen bei einer Sortierung vor der Reinigung dann mehrere Waschstraßen betrieben werden, um die einzelnen Fraktionen zu reinigen. Es ist jedoch auch möglich, zunächst Kunststoffabfälle unterschiedlicher Farben und/oder unterschiedlicher Kunststoffarten vorzuzerkleinern, anschließend zu reinigen und die Sortierung nach Farben und/oder Kunststoffarten erst am Ende des Prozesses mittels einer Farberkennung bzw. einer NIR, Laser, oder Röntgenspektroskopie durchzuführen. Dies kann in einem Auflichtprozess und/oder einem Durchlichtprozess mit geeigneter optischer Detektoreinrichtung (Kamera) erfolgen.

Beim Recycling von Kunststoffflakes, insbesondere PET-Flakes, müssen folgende Anforderungen erfüllt werden:
1. Abtrennen von Folien- und Zellstoffetiketten
2. Abtrennen der Zellstoffe
3. Reinigung der Flakes von Verschmutzungen durch Inhaltsstoffe (beispielsweise Getränkereste)
4. Reinigung der Flakes von anhaftenden Verschmutzungen (beispielsweise Klebstoffe von Etiketten)
5. Abtrennen von Metallen (beispielsweise Weißblech und Aluminiumdosen)
6. Abtrennen von Fremdkunststoffen
7. Sortieren nach Farben (z.B. PET-klar und PET-bunt).

Ähnliche Anforderungen (allerdings mit höheren Grenzwerten) gelten für das werkstoffliche Recycling von Kunststoffen. Allerdings entfällt im Regelfall die Sortierung nach Farben.

Aus WO 2008/058750 A2 ist ein Verfahren zum Abtrennen von Zellstoffen und anderen anhaftenden Stoffen beim Recycling von Abfallkunststoff, insbesondere Mischkunststoff, bekannt. Zum Einsatz kann eine Zahnscheibenmühle kommen, deren Scheiben ineinander greifende Zähne aufweisen, die beabstandet auf konzentrischen Kreisen angeordnet sind. Zwischen den Zähnen eines Kreises sind die Lücken so groß, dass Stücke aus dickerem oder festerem Material frei hindurch treten können. Eine Scheibenmühle ist auch bekannt aus DE 10 2005 013 693 A1. Bei den Reinigungsverfahren nach dem Stand der Technik ist die Aufbringung einer großen Heizleistung erforderlich, um eine zufriedenstellende Reinigung der Kunststoffschnipsel zu erreichen. Heizleistungen von 800 kW sind hierfür zum Teil erforderlich. Dies ist ein erheblicher Energieaufwand. Darüber hinaus ist die Steuerung der Prozesstemperatur über eine separate Heizeinrichtung konstruktiv und regelungstechnisch aufwendig.

Das deutsche Patent DE 12 18869 offen bart ein Verfahren zum Entfernen von Verunreinigungen auf Kunststoffschnipseln unter Verwendung einer Vorrichtung, die eine erste Reinigungsscheibe mit einer ersten Reinigungsfläche und eine zweite Reinigungsscheibe mit einer zweiten Reinigungsfläche umfasst, wobei die Reinigungsflächen einander gegenüberliegen und zwischen sich einen Reinigungsspalt begrenzen, umfassend die Schritte:
- mindestens eine der Reinigungsscheiben wird um ihre Rotationsachse gedreht,
- Flüssigkeit, insbesondere Wasser oder eine wässrige Lösung, wird in den Reinigungsspalt zugeführt,
- zu reinigende Kunststoffschnipsel werden zwischen die Reinigungsscheiben , zugeführt und durch den Reinigungsspalt befördert, wobei die Oberflächen der Kunststoffschnipsel durch die erste und zweite Reinigungsfläche abrasiv bearbeitet werden.

Ausgehend von dem erläuterten Stand der Technik liegt der Erfindung die Aufgabe zugrunde, ein Verfahren der eingangs genannten Art bereitzustellen, mit dem in einfacher und energiesparender Weise die Prozesstemperatur im Reinigungsspalt auf einen gewünschten Wert eingestellt werden kann.

Die Erfindung löst diese Aufgabe durch ein Verfahren der eingangs genannten Art umfassend die Schritte:
- mindestens eine der Reinigungsscheiben wird um ihre Rotationsachse gedreht,
- Flüssigkeit, insbesondere Wasser oder eine wässrige Lösung, wird in den Reinigungsspalt zugeführt,
- zu reinigende Kunststoffschnipsel werden zwischen die Reinigungsscheiben zugeführt und durch den Reinigungsspalt gefördert, wobei die Oberflächen der Kunststoffschnipsel durch die erste und zweite Reinigungsfläche abrasiv bearbeitet werden,
- die Temperaturdifferenz zwischen der Temperatur der durch den Reinigungsspalt geleiteten Flüssigkeit beim Eintritt in den Reinigungsspalt und der Temperatur der durch den Reinigungsspalt geleiteten Flüssigkeit beim Austritt aus dem Reinigungsspalt und/oder mindestens ein diese Temperaturdifferenz charakterisierender Parameter wird gemessen,
- der Abstand der Reinigungsflächen zueinander wird so eingestellt, dass die gemessene Temperaturdifferenz und/oder der mindestens eine diese Temperaturdifferenz charakterisierende Parameter einem Sollwert möglichst nahe kommt.

Wie eingangs erläutert, dient das Verfahren der Reinigung von Kunststoffschnipseln. Wie ebenfalls eingangs erläutert, fallen die Kunststoffschnipsel bei der Zerkleinerung von Kunststoffabfall, beispielsweise Kunststoffverpackungen wie Getränkeflaschen oder ähnliches an. Die Kunststoffschnipsel sind vorzerkleinerte flächige Kunststoffabfälle, die in Form von Flakes (dünnwandige Hartkunststoffe, Folien etc.) oder in Form von stückigen Kunststoffen (dickwandige Hartkunststoffe) mit einer weitgehend definierten Größe vorliegen können. Wie weiterhin eingangs erläutert, können die zu entfernenden Verunreinigungen, insbesondere Oberflächenanhaftungen sein, zum Beispiel Zellstoffreste, Klebereste, Etikettenreste oder organische Verschmutzungen. Die Kunststoffschnipsel sind insbesondere flächige Kunststoffteilchen. Insbesondere bei Kunststoff mit einer geringen Zähigkeit, beispielsweise HDPE, können zu einem gewissen Anteil auch dickere Kunststoffteilchen enthalten sein, die mit dem erfindungsgemäßen Verfahren gereinigt werden.

Bei dem erfindungsgemäßen Verfahren wird eine Vorrichtung verwendet, die eine erste und zweite Reinigungsscheibe besitzt. Die erste und zweite Reinigungsscheibe können jeweils eine (hohl-)zylindrische Grundform besitzen. Die einander gegenüberliegenden Reinigungsflächen können jeweils kreisringförmig sein. Die Reinigungsscheiben können übereinander angeordnet sein, so dass die Reinigungsflächen jeweils in einer horizontalen Ebene liegen. Die Rotationsachse der zumindest einen drehbar angetriebenen Reinigungsscheibe kann gleichzeitig ihre Symmetrieachse sein. Die Rotationsachse kann in vertikaler Richtung verlaufen. Der Antrieb kann ein elektrischer Antrieb sein. Die Kunststoffschnipsel können zentral zwischen die Reinigungsscheiben eingebracht werden. Sie können dann durch den Reinigungsspalt hindurch von innen nach außen gefördert werden, dabei gereinigt werden und außen aus dem Reinigungsspalt ausgebracht werden.

Der Erfindung liegt die Erkenntnis zugrunde, dass über die gezielte Erzeugung von Friktion im Reinigungsspalt und insbesondere eine gezielte abrasive Bearbeitung der Kunststoffschnipsel die Temperatur der durch den Reinigungsspalt geleiteten Flüssigkeit und damit die Prozesstemperatur in einfacher Weise eingestellt werden kann. Insbesondere entsteht durch die bei dem erfindungsgemäßen Verfahren im Zuge der Abrasion erzeugte Friktion ausreichend Wärme, um die Flüssigkeit auf die gewünschte Prozesstemperatur einzustellen. Durch eine ausreichende Erhöhung der Friktion lässt sich die erforderliche Prozessflüssigkeitstemperatur ohne eine zusätzliche Heizung des Flüssigkeitskreislaufes einstellen. Neben der Geometrie der Reinigungsscheiben und insbesondere ihrer Reinigungsflächen lässt sich die Friktion insbesondere über den Abstand der Reinigungsscheiben zueinander einstellen. Je geringer dieser Abstand ist, desto mehr Friktion und Abrasion und damit auch Abwärme entstehen, die von der Prozessflüssigkeit aufgenommen werden. Entsprechend wird erfindungsgemäß insbesondere mehrfach während der Durchführung des Verfahrens, beispielsweise kontinuierlich währen der Durchführung des Verfahrens, die Differenz der Temperatur der durch den Reinigungsspalt geleiteten Flüssigkeit zwischen dem Eintritt in den Reinigungsspalt und dem Austritt aus dem Reinigungsspalt und/oder mindestens ein diese Temperaturdifferenz charakterisierender Parameter gemessen. Eine geeignete Regeleinrichtung vergleicht die Messwerte mit einem Sollwert für die Temperaturdifferenz. Wird hierbei eine unzulässige Abweichung festgestellt, steuert die Regeleinrichtung eine Verstelleinrichtung an, die den Abstand der Reinigungsscheiben zueinander und damit die Dicke des Reinigungsspalts verändert, um die gemessenen Werte möglichst exakt an den jeweils vorgegebenen Sollwert anzupassen. Bei der Erfindung wird ein hydrodynamischer Prozess erzeugt. Dabei ist eine gezielte Abrasion und damit Reinigung der Kunststoffschnipsel möglich, ohne dass hierfür zusätzliche Chemikalien, wie Natronlauge, in den Reinigungsspalt gegeben werden müssen.

Bei dem erfindungsgemäßen Verfahren wird eine Suspension erzeugt, deren Bestandteile die zugeführte Flüssigkeit, beispielsweise Wasser, die gereinigten Kunststoffschnipsel und von diesen abgeriebene Stoffe sind (beispielsweise Kleber, Zellstoff, Etiketten, organische Verschmutzungen usw.). Nach der Reinigung erfolgt ein Trennen der Suspension mit den Verunreinigungen von den gereinigten Kunststoffschnipseln.

Die Flüssigkeitszufuhr dient erfindungsgemäß zum Fördern der Kunststoffschnipsel durch den Reinigungsspalt und zum Abführen des im Zuge des Reinigungsprozesses entstehenden Abriebs. Dabei entstehen Turbulenzen der Wasserströmung, die wiederum zu sehr hohen Fließgeschwindigkeiten der Flüssigkeit durch den Reinigungsspalt führen. Es kommt zu einem starken Anpressen der zu reinigenden Kunststoffschnipsel an die Reinigungsflächen. Die Reinigung der Kunststoffschnipsel wird hierdurch verbessert. Bei dem erfindungsgemäßen Verfahren ist keine Mindestfeststoffkonzentration (Verhältnis Feststoffmenge, insbesondere Kunststoffschnipselmenge, zu Flüssigkeitsmenge) vorgegeben. Auch geringe Feststoffkonzentrationen sind erfindungsgemäß darstellbar. Insbesondere können Feststoffkonzentrationen von weniger als 10% zum Einsatz kommen. Die maximale Feststoffkonzentration ist abhängig von dem Grad der Verschmutzung bzw. der maximalen Verarbeitungskapazität der verwendeten Reinigungsscheibe. Die maximale Feststoffkonzentration kann durch Verwendung größerer Reinigungsscheiben erhöht werden. Die verwendete Flüssigkeitsmenge wird an den Verschmutzungsgrad der zu reinigenden Kunststoffschnipsel und die im Prozess erzeugte Wärme angepasst.

Bei dem erfindungsgemäßen Verfahren kann insbesondere vorgesehen sein, dass die Kunststoffschnipsel im Zuge der abrasiven Bearbeitung in dem Reinigungsspalt nicht zerkleinert werden. Hierdurch wird der Reinigungseffekt verbessert. Es findet eine tangentiale Friktion bzw. Scherreibung statt, die eine ausreichende Wärmeerzeugung für die gewünschte Prozesstemperatur und damit auch eine zufriedenstellende Reinigung der Kunststoffschnipsel ermöglicht. Indem eine Zerkleinerung vermieden wird, wird ein Verlust von Prozesswärme aufgrund von an den Kunststoffschnipseln verrichteter Formänderungsarbeit weitgehend vermieden. Die eingebrachte Energie wird vielmehr weitgehend in Wärme umgewandelt Um eine Abrasion, jedoch keine Zerkleinerung zu erreichen, wird der Reinigungsspalt gerade auf eine solche Dicke eingestellt, dass diese Vorgabe erfüllt ist. Wie bereits erläutert, kann vorgesehen sein, dass die durch den Reinigungsspalt geleitete Flüssigkeit nicht durch eine separate Heizeinrichtung erwärmt wird. Vielmehr kann die Erwärmung allein durch die erzeugte Friktion bereitgestellt werden. Es kann sogar erforderlich sein, die durch den Reinigungsspalt geleitete Flüssigkeit durch eine Kühleinrichtung zu kühlen, wenn die für die Reinigung erforderliche Friktion zu viel Wärme erzeugt. Es ist dabei auch möglich, im Zuge des Prozesses erzeugte, jedoch nicht benötigte Wärme abzuführen und für andere Prozesse, beispielsweise zum Beheizen von Gebäuden oder zur Energieerzeugung zu nutzen. Beispielsweise kann nicht benötigte Wärme mittels eines Wärmetauschers aus dem Prozess abgeführt und für andere Zwecke genutzt werden.

Die Reinigungsflächen der Reinigungsscheiben der bei dem erfindungsgemäßen Verfahren verwendeten Vorrichtung können jeweils eine Mehrzahl von sich zwischen einem inneren und einem äußeren Rand der Reinigungsflächen erstreckenden Reinigungsrippen aufweisen, wobei zumindest eine Flanke der Reinigungsrippen gegenüber der Axialrichtung der jeweiligen Reinigungsscheibe geneigt oder gekrümmt ist, und dass zwischen zumindest einigen zueinander benachbarten Reinigungsrippen mehrere quer zur Erstreckungsrichtung der Reinigungsrippen verlaufende Reinigungsstege angeordnet sind.

Die Reinigungsscheiben der Vorrichtung weisen also Reinigungsrippen auf, die zwischen dem inneren und dem äußeren Rand der Reinigungsflächen bzw. der Reinigungsscheiben verlaufen. Die Rippen können insbesondere durchgehend, also ohne Unterbrechungen in ihrer Erstreckungsrichtung, ausgebildet sein. Sofern die Reinigungsflächen bzw. Reinigungsscheiben im Bereich ihres Zentrums geschlossen sind, verlaufen die Reinigungsrippen zwischen dem Zentrum und einem äußeren Rand der Reinigungsflächen bzw. Reinigungsscheiben. Die Reinigungsrippen können einen geraden Verlauf besitzen oder gekrümmt sein. Sie können weiterhin in radialer Richtung über die jeweilige Reinigungsfläche verlaufen. Es ist jedoch auch möglich, dass sie gegenüber der radialen Richtung geneigt oder gekrümmt sind. Mindestens eine der Flanken der Reinigungsrippen ist erfindungsgemäß gegenüber der Symmetrieachse bzw. Drehachse der jeweiligen Reinigungsscheibe gekrümmt oder geneigt Die entsprechenden Flanken können also jeweils in einer ebenen oder in einer gekrümmten Fläche liegen. Wie erläutert, können die Achsen der Reinigungsscheiben jeweils in vertikaler Richtung verlaufen. Es ist dabei auch möglich, dass beide Flanken der Reinigungsrippen gegenüber der Symmetrieachse der jeweiligen Reinigungsscheibe gekrümmt oder geneigt sind. Weiterhin sind zwischen zumindest einigen, insbesondere sämtlichen, benachbart zueinander verlaufenden Reinigungsrippen erfindungsgemäß Reinigungsstege angeordnet. Sie verlaufen quer zur Erstreckungsrichtung der Reinigungsrippen. Sie können senkrecht zur Erstreckungsrichtung der Reinigungsrippen verlaufen. Sie können aber auch in einer Richtung quer zur Erstreckungsrichtung der Reinigungsrippen verlaufen, die einen kleineren oder größeren Winkel als 90° zur Erstreckungsrichtung der Reinigungsrippen besitzt.

Bei der Aufbereitung von Kunststoffschnipseln, insbesondere von Kunststoffflakes, ist entscheidend, dass die Reinigung der Kunststoffschnipsel ohne eine starke mechanische Beanspruchung bzw. Deformation (Stauchung) erfolgt. Durch die Reduzierung der mechanischen Beanspruchung durch Stauchung wird eine bessere Reinigung der Kunststoffschnipsel erreicht. Insbesondere wird ein Falten oder Knäueln der Kunststoffschnipsel vermieden. Die mit den Verunreinigungen behafteten Oberflächen der Kunststoffschnipsel bleiben somit für die Reinigung zugänglich. Außerdem haben glatte Kunststoffschnipsel eine höhere Schüttdichte und neigen nicht zu einer Verzahnung, so dass ihre Förderfähigkeit verbessert ist. Darüber hinaus lassen sich glatte Kunststoffschnipsel besser sortieren, insbesondere in Sortiervorrichtungen, in denen die Kunststoffschnipsel schwerkraftbedingt von oben nach unten fallen. So bildet sich bei glatten Kunststoffschnipseln ein einheitlicher "Kunststoffschnipselvorhang". Schließlich wird durch die Verringerung der mechanischen Beanspruchung die Erzeugung von Feinanteil vermieden. Gleichzeitig steht mehr Wärme für die Bereitstellung der gewünschten Prozesstemperatur zur Verfügung.

Es hat sich gezeigt, dass die erfindungsgemäße Geometrie der Reinigungsscheiben, insbesondere die Neigung bzw. Krümmung mindestens einer der Flanken der Reinigungsrippen, zu einer solchen geringeren mechanischen Beanspruchung führt. Bei der erfindungsgemäßen Geometrie der Reinigungsscheiben werden die Kunststoffschnipsel zwischen die Scheiben, insbesondere zwischen die Reinigungsrippen, gezogen. Ein Knicken bzw. Falten oder Knäueln der Kunststoffschnipsel wird vermieden. Zwischen den Reinigungsscheiben liegt somit im Idealfall eine Ein-Korn-Schicht der Kunststoffschnipsel vor, so dass diese optimal von Oberflächenverunreinigungen gereinigt werden können. Die Oberfläche der Reinigungsrippen erzeugt dabei die erforderliche Friktion zur Reinigung der Kunststoffschnipsel. Insbesondere werden die Kunststoffschnipsel bei der erfindungsgemäßen Reinigungsscheiben-Geometrie im Wesentlichen vollflächig angeschliffen, wodurch sämtliche anhaftenden Verschmutzungen abgelöst werden. Das Zugeben von Chemikalien, beispielsweise Natron-Lauge, wie beim Stand der Technik für die Reinigung oftmals erforderlich, ist erfindungsgemäß nicht notwendig. Vielmehr führt die erfindungsgemäße Geometrie der Reinigungsscheiben bzw. der Reinigungsflächen zu einer ausreichenden Reinigung der Kunststoffschnipsel, ohne dass es dabei zu einer Zerkleinerung der Kunststoffschnipsel kommt bzw. kommen muss.

Weiterhin erfolgt bei der erfindungsgemäßen Geometrie ein leichtes Recken der Kunststoffschnipsel, so dass diese glatte gezogen werden und gegebenenfalls gefaltete Kunststoffschnipsel (beispielsweise aus einer Vorzerkleinerung) wieder aufgefaltet werden. Es hat sich insbesondere gezeigt, dass der Hauptteil der Friktion zum Abschleifen und damit Reinigen der Kunststoffschnipsel im Bereich der schrägen bzw. gekrümmten Flanken der Reinigungsrippen erfolgt. Wie erwähnt, muss die entsprechende Flanke dazu nicht zwangsweise in einer planen Ebene liegen. Vielmehr kann eine gekrümmte Flanke vorliegen, so dass ein weicher Übergang zur Scheitelfläche erreicht wird. Wichtig ist, dass eine ausreichend große Friktionsfläche der Reinigungsrippen vorhanden ist, so dass ein ausreichender Reinigungseffekt entsteht. Die in den Kanälen zwischen den Reinigungsrippen erfindungsgemäß angeordneten Reinigungsstege wirken als Barrieren und zwingen die Kunststoffschnipsel zwischen die Reinigungsscheiben, insbesondere zwischen die Reinigungsrippen der Reinigungsscheiben.

Das erfindungsgemäß erreichte gezielte Anschleifen der Kunststoffschnipsel hat neben der Reinigung noch einen weiteren vorteilhaften Effekt. So werden die Kunststoffschnipsel mit einer matten Oberfläche ausgestattet, die Licht weniger stark reflektiert. Dies erleichtert eine optische Sortierung der Kunststoffschnipsel nach dem Reinigungsprozess. Gerade bei optischen Sortiervorrichtungen, die nach dem Auflichtverfahren zur Farberkennung arbeiten, ist eine stark glänzende und damit reflektierende Oberfläche nachteilig. Durch das erfindungsgemäße Anschleifen der Kunststoffschnipsel wird also eine bessere Erkennung der Kunststoffschnipsel erreicht.

Nach einer Ausgestaltung können die geneigten oder gekrümmten Flanken der Reinigungsrippen der ersten und/oder zweiten Reinigungsscheibe die bei einer Drehung der mindestens einen Reinigungsscheibe vorlaufenden Flanken sein. Bei der nicht drehend angetriebenen Reinigungsscheibe ist die vorlaufende Flanke der Reinigungsrippen die im Zuge der Relativdrehung zwischen den Reinigungsscheiben vorlaufende Flanke. Durch diese Ausgestaltung werden das erfindungsgemäße Anschleifen der Kunststoffschnipsel und damit die erfindungsgemäße Reinigung in besonders effektiver Weise durchgeführt.

Der Grad der erfindungsgemäßen Neigung bzw. Krümmung der Flanken hängt entscheidend von der Art des zu reinigenden Kunststoffes, der Form der Kunststoffschnipsel und der Größenverteilung innerhalb der zu reinigenden Kunststoffschnipselmenge ab. Entscheidend ist jeweils, dass eine Zerkleinerung bzw. Stauchung der Kunststoffschnipsel möglichst nicht eintritt. Gleichzeitig müssen die Kunststoffschnipsel einer für die Reinigung ausreichenden Friktion unterworfen werden. Daher muss zwischen den einander zugewandten Flanken benachbarter Reinigungsrippen ausreichend Platz zur Aufnahme der zu reinigenden Kunststoffschnipsel bestehen. Bei flachen Kunststoffschnipseln sind dabei Flanken mit einem großen Neigungswinkel bzw. Krümmungswinkel gegenüber der Axialrichtung geeignet. Insbesondere werden die Kunststoffschnipsel bei einer flach ansteigenden Flanke besonders gut zwischen die Reinigungsscheiben gezogen. Außerdem steht eine große Abriebfläche zur Verfügung, so dass ein besonders guter Reinigungseffekt erzielt wird. Bei stückigen Kunststoffschnipseln ist dagegen ein kleinerer Neigungswinkel bzw. Krümmungswinkel gegenüber der Axialrichtung geeignet. Es ist beispielsweise möglich, dass die geneigten Flanken der Reinigungsrippen der ersten und/oder zweiten Reinigungsscheibe jeweils einen Neigungswinkel von mindestens 10°, vorzugsweise mindestens 30%, weiter vorzugsweise mindestens 45°, gegenüber der Axialrichtung der jeweiligen Reinigungsscheibe besitzen. Sofern die Flanken der Reinigungsrippen gekrümmt sind, kann vorgesehen sein, dass, in einer Schnittebene senkrecht zur Erstreckungsrichtung der Reinigungsrippen der ersten und/oder zweiten Reinigungsscheibe gesehen, eine den Beginn und das Ende der gekrümmten Flanken verbindende Linie einen Neigungswinkel von mindestens 10°, vorzugsweise mindestens 30%, weiter vorzugsweise mindestens 45°, gegenüber der Axialrichtung der jeweiligen Reinigungsscheibe besitzt. Obergrenzen für die genannten Winkel können beispielsweise mindestens 45°, vorzugsweise mindestens 60°, weiter vorzugsweise mindestens 80° sein.

Nach einer weiteren Ausgestaltung kann vorgesehen sein, dass bei der erfindungsgemäß verwendeten Vorrichtung zwischen den Scheitelflächen der Reinigungsrippen der ersten Reinigungsfläche und den Scheitelflächen der Reinigungsrippen der zweiten Reinigungsfläche ein Abstand besteht, der im Wesentlichen der durchschnittlichen Dicke der mittels der Zuführeinrichtung zugeführten Kunststoffschnipsel, insbesondere der Hauptkornklasse, entspricht Der Abstand der Reinigungsscheiben und damit die Dicke des Reinigungsspalts werden also an die Dicke der durchschnittlich zu erwarteten Kunststoffschnipsel angepasst.

Der Abstand der Scheiben sollte möglichst so eingestellt werden, dass nur einzelne Kunststoffschnipsel zwischen die Scheiben passen. Dadurch wird eine optimale Reinigung durch Anschleifen der Ober- und Unterseiten der Kunststoffschnipsel erreicht. Hierzu wiederum ist es von Vorteil, wenn die zu reinigenden Kunststoffschnipsel eine möglichst geringe Dickenstreuung aufweisen. Falls eine Dickenstreuung vorhanden ist, kann die Höhe der Reinigungsstege so gewählt werden, dass im Betriebszustand der Reinigungsscheiben der Abstand zwischen gegenüberliegenden Reinigungsstegen der durchschnittlichen Dicke der dicksten Kunststoffschnipsel entspricht. Das Erreichen der jeweils optimalen Grenzdicke des Reinigungsspalts kann an der Leistungsaufnahme der Antriebseinrichtung festgestellt werden. Ein Unterschreiten der Grenzdicke führt zu einem sprunghaften Anstieg der Leistungsaufnahme. Beispielhaft genannt sei für die Aufbereitung von PET-Flaschen aus Einwegssystemen ein Reinigungsspalt von 0,25 mm, bei der Aufbereitung von PET-Mehrwegflaschen (dickere Wandung) ein Reinigungsspalt von 0,50 mm und bei der Aufbereitung von Folienschnipseln ein Reinigungsspalt von 0,1 mm. Der jeweils geeignete Abstand muss abhängig von dem Material ermittelt und angepasst werden.

Nach einer weiteren Ausgestaltung können bei der erfindungsgemäß verwendeten Vorrichtung die Reinigungsrippen der ersten und/oder zweiten Reinigungsscheibe in einer Umlaufrichtung um das Zentrum der jeweiligen Reinigungsscheibe oder der jeweiligen Reinigungsfläche (jeweils) ein Sägezahnprofil bilden. Die Reinigungsrippen können in Umlaufrichtung, also beispielsweise entlang einer oder mehrerer kreisförmiger oder anderweitiger Bahnen mit unterschiedlichen Radii um das Zentrum der Reinigungsscheibe bzw. der Reinigungsfläche im Schnitt ein Sägezahnprofil bilden. Sie können also in Umlaufrichtung gesehen im Wesentlichen direkt ineinander übergehen. Hierdurch werden (horizontale) Bodenflächen zwischen benachbarten Reinigungsrippen vermieden, in denen sich Kunststoffschnipsel unerwünscht ansammeln könnten.

Nach einer weiteren Ausgestaltung können die Reinigungsrippen der ersten und/oder zweiten Reinigungsscheibe zumindest im Übergang zwischen Ihrer mindestens einen geneigten oder gekrümmten Flanke und ihrer Scheitelfläche abgerundet sein. Weiterhin können die Reinigungsrippen der ersten und/oder zweiten Reinigungsscheibe eine horizontale Scheitelfläche besitzen. Selbstverständlich können die Reinigungsrippen auch im Übergang zu einer gegebenenfalls nicht geneigten oder nicht gekrümmten zweiten Flanke abgerundet sein. Indem an dem Übergang zwischen der Flanke und der Scheitelfläche keine scharfe Kante, insbesondere kein scharfer Grat, gebildet ist, wird ein Aufkräuseln der Kunststoffschnipsel vermieden. Vielmehr wird durch die Abrundung und die horizontale Scheitelfläche sichergestellt, dass die Kunststoffschnipsel im ungefalteten flachen Zustand zwischen die Reinigungsscheiben gezogen und dort gereinigt werden.

Die Reinigungsstege der ersten und/oder zweiten Reinigungsscheibe können in radialer Richtung der Reinigungsscheiben jeweils rampenartig ansteigen, also insbesondere von innen nach außen. Diese Ausgestaltung führt zu einem besonders wirksamen Einziehen der Kunststoffschnipsel in dem Bearbeitungsbereich zwischen den Reinigungsscheiben. Nach einer weiteren Ausgestaltung können die Reinigungsstege der ersten Reinigungsscheibe eine geringere Höhe besitzen als die Reinigungsrippen der ersten Reinigungsscheibe und/oder die Reinigungsstege der zweiten Reinigungsscheibe eine geringere Höhe besitzen als die Reinigungsrippen der zweiten Reinigungsscheibe. Bei dieser Ausgestaltung werden die Kunststoffschnipsel materialschonender zwischen den Reinigungsscheiben bearbeitet, da nicht an jedem Reinigungssteg sämtliche Schnipsel zwischen die Scheiben gezwungen werden. Insbesondere können Flakes, die eine größerer Wandstärke als der Reinigungsspalt zwischen den Reinigungsrippen aufweisen, durch die sich ergebene Lücke hindurch gleiten, ohne dass sie von den Reinigungsrippen zerrieben werden.

Grundsätzlich kann die erste und/oder zweite Reinigungsscheibe einteilig ausgebildet sein oder aus mehreren Reinigungsscheibensegmenten bestehen. Nach einer weiteren Ausgestaltung können die Reinigungsstege der ersten und zweiten Reinigungsscheibe so angeordnet sein, dass sie bei einer Drehung der mindestens einen Reinigungsscheibe nicht oder nicht dauerhaft in einander direkt gegenüberliegende Positionen gelangen. Weiterhin können die Reinigungsstege auf der ersten und zweiten Reinigungsfläche jeweils entlang mehrerer kreisförmiger Bahnen um das Zentrum der jeweiligen Reinigungsscheibe oder der jeweiligen Reinigungsfläche angeordnet sein. Die kreisförmigen Bahnen der Reinigungsstege auf der ersten Reinigungsfläche können dabei andere Radien besitzen als die kreisförmigen Bahnen der Reinigungsstege auf der zweiten Reinigungsfläche. Weiterhin kann vorgesehen sein, dass die Reinigungsstege entlang der kreisförmigen Bahn jeweils zwischen jedem Paar von benachbarten Reinigungsrippen angeordnet sind. Die kreisförmigen Bahnen auf einer Reinigungsscheibe sind insbesondere konzentrisch zueinander. Das Zentrum der Reinigungsfläche kann identisch zu dem Zentrum der Reinigungsscheibe sein. Wie erläutert, kann die Reinigungsfläche zum Beispiel kreisringförmig sein, während die Reinigungsscheibe zum Beispiel (hohl-) zylindrisch sein kann. Unterschiedliche Radien der kreisförmigen Bahnen auf der ersten und zweiten Reinigungsscheibe stellen sicher, dass sich die Reinigungsstege im Zuge der Relativdrehung der Reinigungsscheiben nicht direkt gegenüber liegen. Hierdurch wird die mechanische Beanspruchung der Kunststoffschnipsel verringert. Die Reinigungsscheiben können also unterschiedlich zueinander ausgestaltet sein. Sie können allerdings an ihrem äußeren und/oder ihrem inneren Rand jeweils direkt gegenüberliegend eine Kreisbahn mit Reinigungsstegen mit identischem Radius besitzen.

Alternativ ist es auch möglich, dass die Reinigungsflächen der oberen und unteren Reinigungsscheibe identisch zueinander ausgebildet sind. Dabei können zumindest einige der kreisförmigen Bahnen auf der ersten Reinigungsfläche und der kreisförmigen Bahnen auf der zweiten Reinigungsfläche den gleichen Radius besitzen, wobei zumindest die Reinigungsstege entlang kreisförmiger Bahnen mit gleichem Radius jeweils nur zwischen jedem zweiten Paar von benachbarten Reinigungsrippen angeordnet sind. Es können dabei insbesondere sämtliche der kreisförmigen Bahnen auf der ersten Reinigungsfläche und der kreisförmigen Bahnen auf der zweiten Reinigungsfläche den gleichen Radius besitzen und weiterhin insbesondere die Reinigungsstege entlang kreisförmiger Bahnen mit gleichem Radius jeweils nur zwischen jedem zweiten Paar von benachbarten Reinigungsrippen angeordnet sein. Hierbei ist also eine alternierende Anordnung vorgesehen, wobei die Reinigungsstege nur in jedem zweiten Kanal zwischen benachbarten Reinigungsrippen vorgesehen sind. Es kommt bei der Relativdrehung der Reinigungsscheiben zueinander also zu einem direkten Gegenüberliegen von Reinigungsstegen während 50% der Bearbeitungszeit. Während diese Ausgestaltung Vorteile hinsichtlich der Herstellungskosten der Reinigungsscheiben besitzt, führt sie allerdings zu einer höheren Beanspruchung der Kunststoffschnipsel. Sie ist insbesondere bei sehr dünnen Kunststoffschnipseln (Kunststofffolienschnipseln) dennoch gut geeignet.

Nach einer weiteren Ausgestaltung kann vorgesehen sein, dass zu reinigende Kunststoffschnipsel vor dem Zuführen zwischen die Reinigungsscheiben und dem Fördern durch den Reinigungsspalt der für das Entfernen von Verunreinigungen eigentlich vorgesehenen Vorrichtung in einer Vorreinigungsvorrichtung einer Vorreinigung unterzogen werden. Die Vorreinigungsvorrichtung besitzt dabei eine erste Reinigungsscheibe mit einer ersten Reinigungsfläche und eine zweite Reinigungsscheibe mit einer zweiten Reinigungsfläche, wobei die Reinigungsflächen einander gegenüberliegen und zwischen sich einen Reinigungsspalt begrenzen, der größer ist als der Reinigungsspalt der anschließend zum Entfernen von Verunreinigungen auf den Kunststoffschnipseln verwendeten Vorrichtung. Wie bei der der Vorreinigung nachfolgenden Hauptreinigung kann dabei mindestens eine der Reinigungsscheiben um ihre Rotationsachse gedreht werden, Flüssigkeit, insbesondere Wasser oder eine wässrige Lösung, kann in den Reinigungsspalt der Vorreinigungsvorrichtung zugeführt werden und die zu reinigenden Kunststoffschnipsel können zwischen die Reinigungsscheiben der Vorreinigungsvorrichtung zugeführt, und durch den Reinigungsspalt gefördert werden. Es erfolgt also ein zweistufiger Reinigungsprozess.

Im Grundsatz kann die Vorreinigungsvorrichtung weitgehend identisch zu der anschließend verwendeten Hauptreinigungsvorrichtung ausgebildet sein. Sie kann allerdings kleiner dimensioniert werden. Indem der Reinigungsspalt der Vorreinigungsvorrichtung größer ist als der der Hauptreinigungsvorrichtung kann erreicht werden, dass nur eine geringe oder im Wesentlichen gar keine abrasive Bearbeitung der Kunststoffschnipsel erfolgt. Insbesondere kann vorgesehen sein, dass der Reinigungsspalt der Vorreinigungsvorrichtung durch Einstellung des Abstands der Reinigungsscheiben so gewählt wird, dass im Zuge der Vorreinigung von den Kunststoffschnipseln entfernte Verunreinigungen, beispielsweise entfernte Zellstoffe, im Wesentlichen nicht zerstört werden. Dies erleichtert die anschließende Reinigung der Kunststoffschnipsel in der Hauptreinigungsvorrichtung erheblich. Es ist dabei auch bei der Vorreinigungsvorrichtung möglich, eine erfindungsgemäße Regelung des Reinigungsspalts auf Grundlage einer Temperaturmessung vorzunehmen.

Es ist auch möglich, dass zu reinigende Kunststoffschnipsel vor dem Zufuhren zwischen die Reinigungsscheiben und dem Fördern durch den Reinigungsspalt der Vorrichtung in einer Vorreinigungsvorrichtung einer Vorreinigung unterzogen werden, wobei die Vorreinigungsvorrichtung einen Reinigungshohlzylinder mit einer ersten Reinigungsfläche an seiner zylindrischen Innenfläche und einen in dem Reinigungshohlzylinder angeordneten Reinigungszylinder mit einer zweiten Reinigungsfläche an seiner zylindrischen Außenfläche umfasst, wobei die Reinigungsflächen zwischen sich einen Reinigungsspalt begrenzen, der größer ist als der Reinigungsspalt der anschließend zum Entfernen von Verunreinigungen auf den Kunststoffschnipseln verwendeten Vorrichtung. Dabei werden der Reinigungshohlzylinder und/oder der Reinigungszylinder drehend angetrieben. Der Reinigungsspalt der Vorreinigungsvorrichtung kann dann wiederum durch Einstellung des Abstands zwischen dem Reinigungshohlzylinder und dem Reinigungszylinder so gewählt werden, dass im Zuge der Vorreinigung von den Kunststoffschnipseln entfernte Verunreinigungen im Wesentlichen nicht zerstört werden.

Schließlich ist es auch möglich, dass zu reinigende Kunststoffschnipsel vor dem Zuführten zwischen die Reinigungsscheiben und dem Fördern durch den Reinigungsspalt der Vorrichtung in einer Vorreinigungsvorrichtung einer Vorreinigung unterzogen werden, wobei die Vorreinigungsvorrichtung einen Reinigungshohlkegel mit einer ersten Reinigungsfläche an seiner kegelförmigen Innenfläche und einen in dem Reinigungshohlkegel angeordneten Reinigungskegel mit einer zweiten Reinigungsfläche an seiner kegelförmigen Außenfläche umfasst, wobei die Reinigungsflächen zwischen sich einen Reinigungsspalt begrenzen, der größer ist als der Reinigungsspalt der anschließend zum Entfernen von Verunreinigungen auf den Kunststoffschnipseln verwendeten Vorrichtung. Dabei werden der Reinigungshohlkegel und/oder der Reinigungskegel drehend angetrieben. Dabei kann der Reinigungsspalt der Vorreinigungsvorrichtung wiederum durch Einstellung des Abstands zwischen dem Reinigungshohlkegel und dem Reinigungskegel so gewählt werden, dass im Zuge der Vorreinigung von den Kunststoffschnipseln entfernte Verunreinigungen im Wesentlichen nicht zerstört werden.

Bei allen der vorgenannten drei alternativen Ausgestaltungen kann insbesondere sichergestellt werden, dass im Zuge der Vorreinigung von den Kunststoffschnipseln entfernte Verunreinigungen, wie Zellstoffe, im Wesentlichen nicht zerstört werden, also als intakte Struktur (z.B. Zellstofffaser) vorliegen. Diese können dann in einfacher Weise anschließend mittels Filtration und/oder Siebung aus der Prozessflüssigkeit, insbesondere dem Prozesswasser, entfernt werden. Werden Verunreinigungen dagegen zu stark zerstört (z.B. Zellstofffasern zu stark aufgemahlen), sind diese nur noch mit aufwendigen Prozesswasserreinigungsmethoden entfernbar.

Ein Ausfuhrungsbeispiel der Erfindung wird nachfolgend anhand von Figuren näher erläutert. Es zeigen schematisch:
- Figur 1: eine Reinigungsscheibe einer bei dem erfindungsgemäßen Verfahren verwendeten Vorrichtung in einer Ansicht von oben,
- Figur 2: einen vergrößerten Ausschnitt der Reinigungsscheibe aus Figur 1 in einer Ansicht von oben,
- Figur 3: einen vergrößerten Ausschnitt der Reinigungsscheibe aus Figur 1 in einer perspektivischen Ansicht,
- Figur 4: einen Ausschnitt einer ersten und einer zweiten Reinigungsscheibe einer bei dem erfindungsgemäßen Verfahren verwendeten Vorrichtung in einer perspektivischen Ansicht,
- Figur 5: einen Teil einer Schnittansicht der Reinigungsscheibe aus Figur 1 in Radialrichtung,
- Figur 6: einen Teil einer Schnittansicht in einer Umlaufrichtung um das Zentrum der Reinigungsscheiben in Figur 4,
- Figur 7: die Ansicht aus Figur 6 in einem ersten Betriebszustand,
- Figur 8: die Ansicht aus Figur 6 in einem zweiten Betriebszustand, und
- Figur 9: die Ansicht aus Figur 6 in einem dritten Betriebszustand.

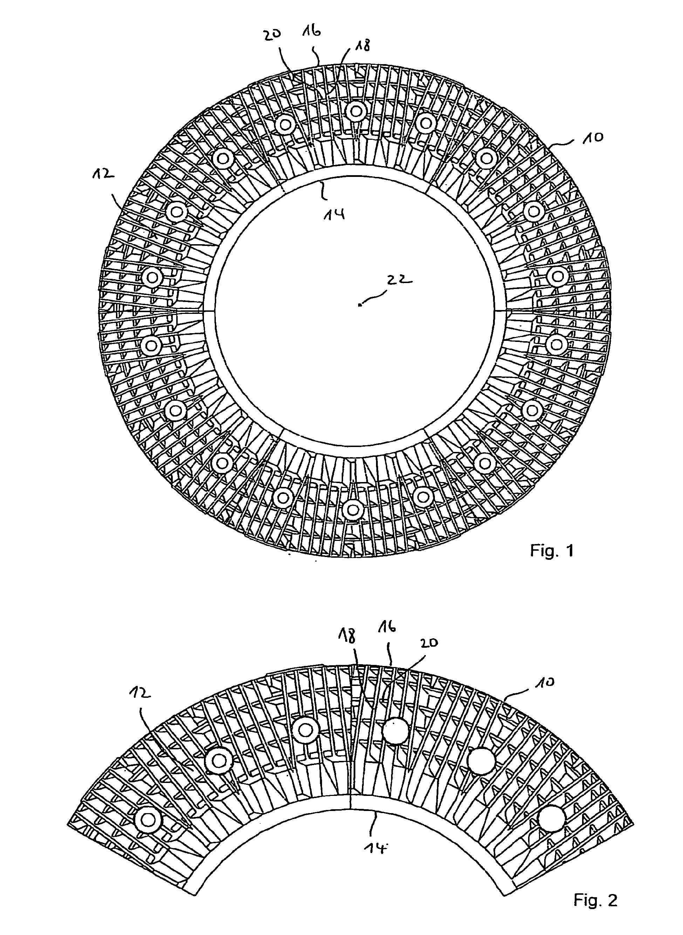

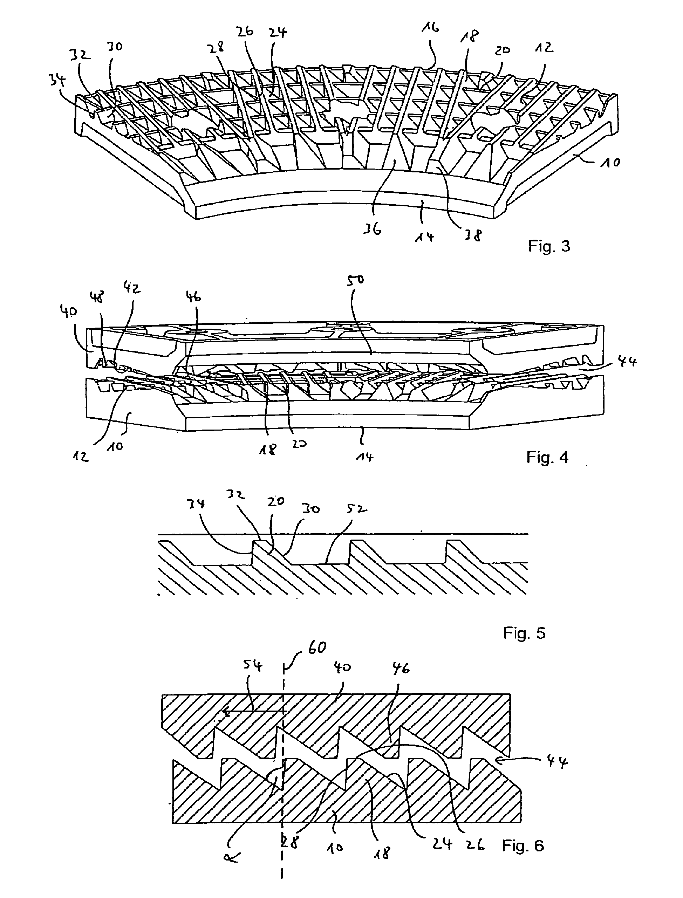

Soweit nichts anderes angegeben ist, bezeichnen in den Figuren gleiche Bezugszeichen gleiche Gegenstände. In Figur 1 ist eine untere Reinigungsscheibe 10 einer bei dem erfindungsgemäßen Verfahren verwendeten Vorrichtung in einer Ansicht von oben gezeigt. Die Reinigungsscheibe 10 besitzt eine hohlzylindrische Grundform und eine kreisringförmige Reinigungsfläche 12. In dem gezeigten Beispiel ist die Reinigungsscheibe 10 aus mehreren Reinigungsscheibensegmenten zusammengesetzt. Auf der Reinigungsfläche 12 ist eine Vielzahl von sich zwischen dem inneren Rand 14 und dem äußeren Rand 16 der Reinigungsfläche erstreckenden Reinigungsrippen 18 angeordnet. Es ist zu erkennen, dass die Reinigungsrippen 18 eines Reinigungsscheibensegments im Wesentlichen parallel zueinander angeordnet sind. Insgesamt verlaufen die Reinigungsrippen 18 in radialer Richtung der Reinigungsscheibe oder in einem geringen Winkel zur radialen Richtung. In dem gezeigten Beispiel sind zwischen sämtlichen zueinander benachbarten Reinigungsrippen 18 jeweils mehrere sich quer zur Erstreckungsrichtung der Reinigungsrippen erstreckende Reinigungsstege 20 angeordnet. Die Reinigungsstege 20 sind entlang mehrerer, in dem gezeigten Beispiel fünf konzentrischer kreisförmiger Bahnen um das Zentrum der Reinigungsscheibe 10 bzw. der Reinigungsfläche 12 angeordnet. Der Aufbau der Reinigungsrippen 18 und der Reinigungsstege 20 ist in Figur 3 zu erkennen. Insbesondere ist in Figur 3 zu erkennen, dass die Reinigungsrippen 18 jeweils eine gegenüber der in Figur 1 bei dem Bezugszeichen 22 gezeigten Rotationsachse der Reinigungsscheibe 10 geneigte erste Flanke 24 besitzen. Die erste Flanke 24 mündet in eine horizontale Scheitelfläche 26. Die horizontale Scheitelfläche 26 mündet wiederum in eine zweite Flanke 28 der Reinigungsrippen 18, die in dem gezeigten Beispiel in einer vertikalen Ebene liegt, also gegenüber der Rotationsachse 22 der Reinigungsscheibe 10 nicht geneigt ist. Außerdem ist in Figur 3 zu erkennen, dass die Reinigungsstege 20 in radialer Richtung gesehen jeweils eine rampenartig ansteigende Fläche 30 besitzen, die in eine ebenfalls horizontale Scheitelfläche 32 mündet. Die der Fläche 30 gegenüberliegende Fläche 34 der Reinigungsstege ist wiederum in einer nahezu vertikalen Ebene angeordnet. Schließlich ist in Figur 3 zu erkennen, dass die Höhe der Reinigungsstege 20, insbesondere ihrer Scheitelflächen 32, geringer ist als die Höhe der Reinigungsrippen 18, insbesondere ihrer Scheitelflächen 26. Abhängig von der segmentartigen Ausbildung der Reinigungsscheibe 10 besitzen die Reinigungsrippen abwechselnd einen ausgehend von dem inneren Rand 14 der Reinigungsscheibe 10 sanft ansteigenden Beginn 36 oder einen steil ansteigenden Beginn 38.

In Figur 4 ist die in den Figuren 1 bis 3 gezeigte untere Reinigungsscheibe 10 ausschnittsweise in einer Betriebsposition mit einer oberen Reinigungsscheibe 40 dargestellt. Die obere Reinigungsscheibe 40 entspricht in ihrer Ausgestaltung weitgehend der Ausgestaltung der unteren Reinigungsscheibe 10. So ist auch die obere Reinigungsscheibe 40 mit einer hohlzylindrischen Grundform gebildet und besitzt eine kreisrinarmige Reinigungsfläche 42. Zwischen den Reinigungsflächen 12 und 42 der unteren und oberen Reinigungsscheibe 10, 40 ist entsprechend ein Reinigungsspalt 44 gebildet. Die Reinigungsfläche 42 der oberen Reinigungsscheibe 40 ist ebenfalls großenteils identisch zu der Reinigungsfläche 12 der unteren Reinigungsscheibe 10 ausgebildet. Insbesondere besitzt auch die obere Reinigungsfläche 42 identisch zu den Reinigungsrippen 18 der unteren Reinigungsscheibe 10 ausgebildete Reinigungsrippen 46. Darüber hinaus besitzt auch die obere Reinigungsscheibe 40 zwischen sämtlichen zueinander benachbarten Reinigungsrippen 46 jeweils mehrere Reinigungsstege 48, die wiederum entlang mehrerer konzentrischer Kreisbahnen um das Zentrum der oberen Reinigungsscheibe 40 angeordnet sind. Allerdings unterscheiden sich die Radien der konzentrischen Kreisbahnen der oberen Reinigungsscheibe 40 von den Radien der konzentrischen Kreisbahnen der unteren Reinigungsscheibe 10, so dass bei einer Relativdrehung zwischen den Reinigungsscheiben 10, 40 im Betrieb die Reinigungsstege 20, 48 nicht in eine einander direkt gegenüberliegende Position gelangen. Lediglich an ihrem äußeren Rand ist jeweils eine Kreisbahn mit Reinigungsstegen 20 bzw. 48 der oberen und unteren Reinigungsscheibe 10 bzw. 40 vorgesehen, die einander im Betrieb direkt gegenüber liegen und den äußeren Abschluss der jeweiligen Reinigungsflächen 12, 42 bilden. Die in Figur 4 gezeigte Vorrichtung umfasst weiterhin eine nicht dargestellte Antriebseinrichtung, mit der beispielsweise die obere Reinigungsscheibe 40 um ihre Rotationsachse gedreht werden kann. Weiterhin umfasst die Vorrichtung eine Kunststoffzufuhreinrichtung (ebenfalls nicht dargestellt), mit der zu reinigende Kunststoffschnipsel zentral, also über den inneren Rand 14 bzw. 50 der Reinigungsscheiben 10, 40 in den Reinigungsspalt 44 zugeführt werden. Schließlich umfasst die Vorrichtung eine ebenfalls nicht dargestellte Flüssigkeitszuführeinrichtung, mit der in dem gezeigten Beispiel Wasser ebenfalls zentral über den inneren Rand 14 bzw. 50 der Reinigungsscheiben 10, 40 in den Reinigungsspalt 44 geleitet wird.

In der Schnittansicht in radialer Richtung nach Figur 5 ist die geometrische Ausbildung der Reinigungsstege 20 der in dem gezeigten Beispiel unteren Reinigungsscheibe 10 zu erkennen. Insbesondere sind dabei die rampenartig ansteigende Fläche 30, die Scheitelfläche 32 und die vertikale Fläche 34 gut zu erkennen. Weiterhin ist zu erkennen, dass zwischen in radialer Richtung hintereinander angeordneten Reinigungsstegen 20 jeweils eine horizontale Bodenfläche 52 ausgebildet ist. Die Reinigungsstege 48 der oberen Reinigungsscheibe 40 sind insoweit identisch ausgebildet.

Figur 6 zeigt einen Schnitt der Vorrichtung aus Figur 4 in einer Umlaufrichtung um die Rotationsachse 22 der Reinigungsscheibe 10 bzw. um die koaxial verlaufende Rotationsachse der oberen Reinigungsscheibe 40. Zu erkennen ist wiederum die zu den Rotationsachsen der unteren und oberen Reinigungsscheibe 10, 40 geneigte erste Flanke 24 der Reinigungsrippen 18 der unteren Reinigungsscheibe 10. Weiterhin ist jeweils die horizontale Scheitelfläche 26 und die vertikale zweite Flanke 28 der Reinigungsrippen 18 der unteren Reinigungsscheibe 10 zu erkennen. Weiterhin ist in Figur 6 zu erkennen, dass die Reinigungsrippen 18 unmittelbar hintereinander angeordnet sind, so dass sie in der Schnittansicht in Figur 6 ein Sägezahnprofil ergeben. Schließlich ist zu erkennen, dass die Reinigungsrippen 46 der oberen Reinigungsscheibe 40 insoweit identisch zu den Reinigungsrippen 18 der unteren Reinigungsscheibe 10 ausgebildet sind. Die Drehrichtung der oberen Reinigungsscheibe 40 im Zuge der Rotation durch die Antriebseinrichtung ist in Figur 6 durch den Pfeil 54 veranschaulicht. Zu erkennen ist, dass die gegenüber der Rotationsachse der oberen bzw. unteren Reinigungsscheibe 10, 40 geneigten Flanken der Reinigungsrippen 18, 46 die bei einer Drehung der oberen Reinigungsscheibe 40 jeweils vorlaufenden Flanken sind. Zu erwähnen ist außerdem, dass die geneigten Flanken der Reinigungsrippen 18, 46 jeweils einen Winkel a zu in Figur 6 bei dem Bezugszeichen 60 dargestellten der Axialrichtung der Reinigungsscheiben 10, 40 von mehr als 45° besitzen. Hierdurch steht eine vergleichsweise große Abriebfläche auf den geneigten Flanken zur Verfügung, wodurch der Reinigungseffekt verbessert wird. Die Axialrichtung 60 verläuft parallel zu der Rotationsachse 22 der Reinigungsscheibe 10.

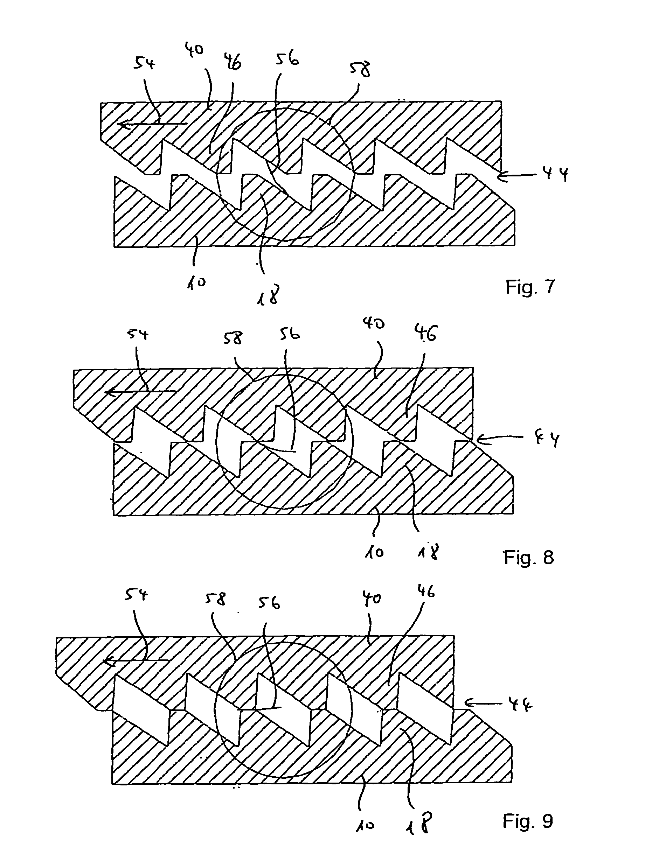

Ausgehend von der Darstellung der Figur 6 soll anhand der Figuren 7 bis 9 die Reinigung eines Kunststoffschnipsels 56, insbesondere eines Kunststoffflakes 56, veranschaulicht werden. Figur 7 zeigt die Relativposition der Reinigungsscheiben 10, 40 zueinander, wie sie in Figur 6 gezeigt ist. Der Kunststoffflake 56 befindet sich innerhalb des in den Figuren 7 bis 9 aus Veranschaulichungsgründen gezeigten Kreises 58. In Figur 7 befindet sich der Kunststoffflake 56 in einer leicht geknickten bzw. gebogenen Form in einem Freiraum zwischen gegenüberliegenden Reinigungsrippen 18, 46. Im Zuge der Drehbewegung der oberen Reinigungsscheibe 40 entlang des Pfeils 54 gelangt der Kunststoffflake 56 anschließend zwischen die Scheitelflächen der Reinigungsrippen 18, 48, wie dies in den Figuren 8 und 9 gezeigt ist. Dabei kommt es zu einem Recken des Kunststoffflakes 56 sowie einem abrasiven Kontakt mit den gekrümmten Flanken und den Scheitelflächen der beteiligten Reinigungsrippen 18, 46. Hierbei wiederum kommt es zu einem Abrieb von auf den Oberflächen des Kunststoffflakes 56 anhaftenden Verunreinigungen. Verstärkt wird dieser Effekt durch die aufgrund der Geometrie der Reinigungsscheiben 10, 40 bedingten sehr hohen Fließgeschwindigkeiten des durch den Reinigungsspalt 44 geleiteten Wassers.

Bei der abrasiven Bearbeitung der Kunststoffschnipsel in dem Reinigungsspalt entsteht erhebliche Wärme, die von dem durch den Reinigungsspalt geleiteten Wasser aufgenommen wird. Erfindungsgemäß ist daher eine nicht näher dargestellte Temperaturmesseinrichtung vorgesehen, mit der während des Betriebs der Vorrichtung kontinuierlich für das durch den Reinigungsspalt geleitete Wasser die Temperaturdifferenz zwischen dem Eintritt des Wassers in den Reinigungsspalt und dem Austritt des Wassers aus dem Reinigungsspalt gemessen wird. Weiterhin ist eine ebenfalls nicht dargestellte Regeleinrichtung vorgesehen, die die von der Temperaturmesseinrichtung aufgenommenen Messwerte mit einer Solltemperaturdifferenz vergleicht Wird hierbei eine unzulässige Abweichung festgestellt, steuert die Regeleinrichtung eine Reinigungsscheibenverstelleinrichtung (nicht gezeigt) an, um den Reinigungsspalt abhängig von der Abweichung zwischen den gemessenen Temperaturdifferenzwerten und dem Temperaturdifferenzsollwert zu verringern oder zu vergrößern, indem mindestens eine der Reinigungsscheiben in vertikaler Richtung relativ zu der anderen Reinigungsscheibe bewegt wird. Anstelle einer direkten Messung der Temperaturdifferenz kann auch ein diese Temperaturdifferenz charakterisierender Parameter gemessen werden, der dann in der erläuterten Weise der Regelung zugrunde gelegt wird. Ein solcher charakterisierender Parameter kann beispielsweise eine Leistungsaufnahme des Antriebs zur Drehung der mindestens einen Reinigungsscheibe sein. In diesem Fall kann die Differenz zwischen der Leistungsaufnahme des Antriebs im Leerlauf mit in den Reinigungsspalt zugeführter Flüssigkeit einerseits und der Leistungsaufnahme im Reinigungsbetrieb der Kunststoffschnipsel gemessen werden. Es erfolgt somit allein durch die Einstellung der Friktion und damit abrasiven Bearbeitung der Kunststoffschnipsel eine Regelung der Prozesswassertemperatur. Sofern erforderlich, kann dabei auch eine Kühlung des durch den Reinigungsspalt geleiteten Prozesswassers erfolgen. Hierzu kann eine geeignete Kühleinrichtung vorgesehen sein.

Es kann dabei auch vorgesehen sein, dass die zu reinigenden Kunststoffschnipsel vor dem Zuführen zwischen die Reinigungsscheiben 10, 40 und dem Fördern durch den Reinigungsspalt 44 der für das Entfernen von Verunreinigungen eigentlich vorgesehenen Vorrichtung in einer nicht dargestellten Vorreinigungsvorrichtung einer Vorreinigung unterzogen werden, wie dies oben erläutert wurde.

## Patentansprüche

1. Verfahren zum Entfernen von Verunreinigungen auf Kunststoffschnipseln unter Verwendung einer Vorrichtung, die eine erste Reinigungsscheibe (10) mit einer ersten Reinigungsfläche (12) und eine zweite Reinigungsscheibe (40) mit einer zweiten Reinigungsfläche (42) umfasst, wobei die Reinigungsflächen (12, 42) einander gegenüberliegen und zwischen sich einen Reinigungsspalt (44) begrenzen, umfassend die Schritte:
- mindestens eine der Reinigungsscheiben (10, 40) wird um ihre Rotationsachse gedreht,
- Flüssigkeit, insbesondere Wasser oder eine wässrige Lösung, wird in den Reinigungsspalt (44) zugeführt,
- zu reinigende Kunststoffschnipsel werden zwischen die Reinigungsscheiben (10, 40) zugeführt und durch den Reinigungsspalt (44) gefördert, wobei die Oberflächen der Kunststoffschnipsel durch die erste und zweite Reinigungsfläche (12, 42) abrasiv bearbeitet werden,
- die Temperaturdifferenz zwischen der Temperatur der durch den Reinigungsspalt (44) geleiteten Flüssigkeit beim Eintritt in den Reinigungsspalt (44) und der Temperatur der durch den Reinigungsspalt (44) geleiteten Flüssigkeit beim Austritt aus dem Reinigungsspalt (44) und/oder mindestens ein diese Temperaturdifferenz charakterisierender Parameter wird gemessen,
- der Abstand der Reinigungsflächen (12, 42) zueinander wird so eingestellt, dass die gemessene Temperaturdifferenz und/oder der mindestens eine diese Temperaturdifferenz charakterisierende Parameter einem Sollwert möglichst nahe kommt.

2. Verfahren nach Anspruch 1, **dadurch gekennzeichnet, dass** die Kunststoffschnipsel im Zuge der abrasiven Bearbeitung in dem Reinigungsspalt (44) nicht zerkleinert werden.

3. Verfahren nach einem der vorhergehenden Ansprüche, **dadurch gekennzeichnet, dass** die durch den Reinigungsspalt (44) geleitete Flüssigkeit nicht durch eine Heizeinrichtung erwärmt wird.

4. Verfahren nach einem der vorhergehenden Ansprüche, **dadurch gekennzeichnet, dass** die durch den Reinigungsspalt (44) geleitete Flüssigkeit durch eine Kühleinrichtung gekühlt wird.

5. Verfahren nach einem der vorhergehenden Ansprüche, **dadurch gekennzeichnet, dass** die Reinigungsflächen (12, 42) der Reinigungsscheiben (10, 40) der Vorrichtung jeweils eine Mehrzahl von sich zwischen einem inneren und einem äußeren Rand der Reinigungsflächen erstreckenden Reinigungsrippen (18, 46) aufweisen, wobei zumindest eine Flanke der Reinigungsrippen (18, 46) gegenüber der Axialrichtung der jeweiligen Reinigungsscheibe (10, 40) geneigt oder gekrümmt ist, und dass zwischen zumindest einigen zueinander benachbarten Reinigungsrippen (18, 46) mehrere quer zur Erstreckungsrichtung der Reinigungsrippen (18, 46) verlaufende Reinigungsstege (20, 48) angeordnet sind.

6. Verfahren nach Anspruch 5, **dadurch gekennzeichnet, dass** die geneigten oder gekrümmten Flanken der Reinigungsrippen (18, 46) der ersten und/oder zweiten Reinigungsscheibe (10, 40) die bei einer Drehung der mindestens einen Reinigungsscheibe (10, 40) vorlaufenden Flanken sind.

7. Verfahren nach einem der Ansprüche 5 oder 6, **dadurch gekennzeichnet, dass** der Abstand der Reinigungsscheiben (10, 40) so eingestellt wird, dass zwischen den Scheitelflächen (26) der Reinigungsrippen (18, 46) der ersten Reinigungsfläche und den Scheitelflächen (26) der Reinigungsrippen (18, 46) der zweiten Reinigungsfläche ein Abstand besteht, der im Wesentlichen der durchschnittlichen Dicke der mittels der Zuführeinrichtung zugeführten Kunststoffschnipsel (56) entspricht

8. Verfahren nach einem der vorhergehenden Ansprüche, **dadurch gekennzeichnet, dass** die Reinigungsscheiben derart gestaltet sind, dass eine unterstützende Pumpwirkung erzeugt wird.

9. Verfahren nach einem der vorhergehenden Ansprüche, **dadurch gekennzeichnet, dass** zu reinigende Kunststoffschnipsel vor dem Zuführen zwischen die Reinigungsscheiben (10, 40) und dem Fördern durch den Reinigungsspalt (44) der Vorrichtung in einer Vorreinigungsvorrichtung einer Vorreinigung unterzogen werden, wobei die Vorreinigungsvorrichtung eine erste Reinigungsscheibe mit einer ersten Reinigungsfläche und eine zweite Reinigungsscheibe mit einer zweiten Reinigungsfläche umfasst, wobei die Reinigungsflächen einander gegenüberliegen und zwischen sich einen Reinigungsspalt begrenzen, der größer ist als der Reinigungsspalt (44) der anschließend zum Entfernen von Verunreinigungen auf den Kunststoffschnipseln verwendeten Vorrichtung.

10. Verfahren nach Anspruch 9, **dadurch gekennzeichnet, dass** der Reinigungsspalt der Vorreinigungsvorrichtung durch Einstellung des Abstands der Reinigungsscheiben so gewählt wird, dass im Zuge der Vorreinigung von den Kunststoffschnipseln entfernte Verunreinigungen im Wesentlichen nicht zerstört werden.

11. Verfahren nach einem der Ansprüche 1 bis 8, **dadurch gekennzeichnet, dass** zu reinigende Kunststoffschnipsel vor dem Zuführen zwischen die Reinigungsscheiben (10, 40) und dem Fördern durch den Reinigungsspalt (44) der Vorrichtung in einer Vorreinigungsvorrichtung einer Vorreinigung unterzogen werden, wobei die Vorreinigungsvorrichtung einen Reinigungshohlzylinder mit einer ersten Reinigungsfläche an seiner zylindrischen Innenfläche und einen in dem Reinigungshohlzylinder angeordneten Reinigungszylinder mit einer zweiten Reinigungsfläche an seiner zylindrischen Außenfläche umfasst, wobei die Reinigungsflächen zwischen sich einen Reinigungsspalt begrenzen, der größer ist als der Reinigungsspalt (44) der anschließend zum Entfernen von Verunreinigungen auf den Kunststoffschnipseln verwendeten Vorrichtung.

12. Verfahren nach Anspruch 11, **dadurch gekennzeichnet, dass** der Reinigungsspalt der Vorreinigungsvorrichtung durch Einstellung des Abstands zwischen dem Reinigungshohlzylinder und dem Reinigungszylinder so gewählt wird, dass im Zuge der Vorreinigung von den Kunststoffschnipseln entfernte Verunreinigungen im Wesentlichen nicht zerstört werden.

13. Verfahren nach einem der Ansprüche 1 bis 8, **dadurch gekennzeichnet, dass** zu reinigende Kunststoffschnipsel vor dem Zuführen zwischen die Reinigungsscheiben (10, 40) und dem Fördern durch den Reinigungsspalt (44) der Vorrichtung in einer Vorreinigungsvorrichtung einer Vorreinigung unterzogen werden, wobei die Vorreinigungsvorrichtung einen Reinigungshohlkegel mit einer ersten Reinigungsfläche an seiner kegelförmigen Innenfläche und einen in dem Reinigungshohlkegel angeordneten Reinigungskegel mit einer zweiten Reinigungsfläche an seiner kegelförmigen Außenfläche umfasst, wobei die Reinigungsflächen zwischen sich einen Reinigungsspalt begrenzen, der größer ist als der Reinigungsspalt (44) der anschließend zum Entfernen von Verunreinigungen auf den Kunststoffschnipseln verwendeten Vorrichtung.

14. Verfahren nach Anspruch 13, **dadurch gekennzeichnet, dass** der Reinigungsspalt der Vorreinigungsvorrichtung durch Einstellung des Abstands zwischen dem Reinigungshohlkegel und dem Reinigungskegel so gewählt wird, dass im Züge der Vorreinigung von den Kunststoffschnipseln entfernte Verunreinigungen im Wesentlichen nicht zerstört werden.

15. Verfahren nach einem der Ansprüche 10, 12 oder 14, **dadurch gekennzeichnet, dass** die entfernten Verunreinigungen anschließend mittels Filtration und/oder Siebung aus der Prozessflüssigkeit entfernt werden.

## Claims

1. A method for removing impurities from shredded plastic using a device comprising a first cleaning disk (10) with a first cleaning surface (12) and a second cleaning disk (40) with a second cleaning surface (42), wherein the cleaning surfaces (12, 42) face one another and define a cleaning gap (44) between one another, comprising the steps:
- rotating at least one of the cleaning disks (10, 40) about the rotational axis thereof,
- feeding liquid, especially water or an aqueous solution, into the cleaning gap (44),
- feeding shredded plastic to be cleaned between the cleaning disks (10, 40) and conveying the shredded plastic through the cleaning gap (44), the surfaces of the shredded plastic being abrasively processed by the first and the second cleaning surface (12, 42),
- measuring the difference between the temperature of the liquid conducted through the cleaning gap (44) at the point of entry into the cleaning gap (44) and the temperature of the liquid conducted through the cleaning gap (44) at the point of discharge from the cleaning gap (44) and/or measuring a parameter characterizing said difference in temperature,
- adjusting the distance between the cleaning surfaces (12, 42) in such a way that the measured difference in temperature and/or the at least one parameter characterizing said difference in temperature comes as close as possible to a desired value.

2. The method according to Claim 1, **characterized in that** the shredded plastic is not shredded in the course of abrasive processing in the cleaning gap (44).

3. The method according to any one of the preceding claims, **characterized in that** the liquid conducted through the cleaning gap (44) is not heated up by a heating device.

4. The method according to any one of the preceding claims, **characterized in that** the liquid conducted through the cleaning gap (44) is cooled by a cooling device.

5. The method according to any one of the preceding claims, **characterized in that** the cleaning surfaces (12, 42) of the cleaning disks (10, 40) of the device each have a plurality of cleaning ribs (18, 46) which extend over an inner and an outer border of the cleaning surfaces, wherein at least one flank of the cleaning ribs (18, 46) is inclined or curved vis-à-vis the axial direction of the respective cleaning disk (10, 40), and that multiple cleaning webs (20, 48) which run transversely to the direction of extension of the cleaning ribs (18, 46) are arranged between at least some adjacent cleaning ribs (18, 46).

6. The method according to Claim 5, **characterized in that** the inclined or curved flanks of the cleaning ribs (18, 46) of the first and/or second cleaning disk (10, 40) are the front flanks in the rotation of the at least one cleaning disk (10, 40).

7. The method according to any one of Claims 5 or 6, **characterized in that** the distance of the cleaning disks (10, 40) is adjusted such that a distance exists between the vertex surfaces (26) of the cleaning ribs (18, 46) of the first cleaning surface and the vertex surfaces (26) of the cleaning ribs (18, 46) of the second cleaning surface that essentially corresponds to the average thickness of the shredded plastic (56) fed by means of the feed apparatus.

8. The method according to any one of the preceding claims, **characterized in that** the cleaning disks are designed such that a supporting pump effect is produced.

9. The method according to any one of the preceding claims, **characterized in that** shredded plastic to be cleaned prior to being fed between the cleaning disks (10, 40) and being conveyed through the cleaning gap (44) of the device is subjected to a pre-cleaning in a pre-cleaning device, wherein the pre-cleaning device comprises a first cleaning disk with a first cleaning surface and a second cleaning disk with a second cleaning surface, wherein the cleaning surfaces face one another and define a cleaning gap between one another that is larger than the cleaning gap (44) of the device used subsequently for the removal of impurities on the shredded plastic.

10. The method according to Claim 9, **characterized in that** the cleaning gap of the pre-cleaning device is selected by adjustment of the distance of the cleaning disks such that impurities removed from the shredded plastic in the course of the pre-cleaning are essentially not destroyed.

11. The method according to any one of Claims 1 through 8, **characterized in that** shredded plastic to be cleaned prior to being fed between the cleaning disks (10, 40) and being conveyed through the cleaning gap (44) of the device is subjected to a pre-cleaning in a pre-cleaning device, wherein the pre-cleaning device comprises a hollow cleaning cylinder with a first cleaning surface on its cylindrical inner surface and a cleaning cylinder arranged in the hollow cleaning cylinder with a second cleaning surface on its cylindrical outer surface, wherein the cleaning surfaces define a cleaning gap between one another that is larger than the cleaning gap (44) of the device used subsequently for the removal of impurities on the shredded plastic.

12. The method according to Claim 11, **characterized in that** the cleaning gap of the pre-cleaning device is selected by adjustment of the distance between the hollow cleaning cylinder and the cleaning cylinder such that impurities removed from the shredded plastic in the course of the pre-cleaning are essentially not destroyed.

13. The method according to any one of Claims 1 through 8, **characterized in that** shredded plastic to be cleaned prior to being fed between the cleaning disks (10, 40) and being conveyed through the cleaning gap (44) of the device is subjected to a pre-cleaning in a pre-cleaning device, wherein the pre-cleaning device comprises a hollow cleaning cone with a first cleaning surface on its conical inner surface and a cleaning cone arranged in the hollow cleaning cone with a second cleaning surface on its conical outer surface, wherein the cleaning surfaces define a cleaning gap between one another that is larger than the cleaning gap (44) of the device used subsequently for the removal of impurities on the shredded plastic.

14. The method according to Claim 13, **characterized in that** the cleaning gap of the pre-cleaning device is selected by adjustment of the distance between the hollow cleaning cone and the cleaning cone such that impurities removed from the shredded plastic in the course of the pre-cleaning are essentially not destroyed.

15. The method according to any one of Claims 10, 12 or 14, **characterized in that** the removed impurities are subsequently removed by means of filtration and/or sieving from the process liquid.

## Revendications

1. Procédé de suppression d'impuretés sur des copeaux de matière plastique avec utilisation d'un dispositif qui comprend un premier disque de nettoyage (10) avec une première surface de nettoyage (12) et un deuxième disque de nettoyage (40) avec une deuxième surface de nettoyage (42), les surfaces de nettoyage (12, 42) étant situées en face l'une de l'autre et délimitant entre elles un interstice de nettoyage (44), comprenant les étapes suivantes :
- au moins un des disques de nettoyage (10, 40) est tourné autour de son axe de rotation,
- du liquide, en particulier de l'eau ou une solution aqueuse, est conduit dans l'interstice de nettoyage (44),
- des copeaux de matière plastique à nettoyer sont conduits entre les disques de nettoyage (10, 40) et transportés à travers l'interstice de nettoyage (44), les surfaces des copeaux de matière plastique étant traitées par abrasion par la première et la deuxième surface de nettoyage (12, 42),
- la différence de température entre la température du liquide guidé à travers l'interstice de nettoyage (44) lors de l'entrée dans l'interstice de nettoyage (44) et la température du liquide guidé à travers l'interstice de nettoyage (44) lors de la sortie hors de l'interstice de nettoyage (44) et/ou au moins un paramètre caractérisant cette différence de température est mesuré(e),
- l'intervalle des surfaces de nettoyage (12, 42) entre elles est réglé de telle sorte que la différence de température mesurée et/ou le paramètre, au moins au nombre de un, caractérisant cette différence de température se rapproche le plus possible d'une valeur de consigne.

2. Procédé selon la revendication 1, **caractérisé en ce que** les copeaux de matière plastique ne sont pas broyés au cours du traitement par abrasion dans l'interstice de nettoyage (44).

3. Procédé selon une des revendications précédentes, **caractérisé en ce que** le liquide guidé à travers l'interstice de nettoyage (44) n'est pas réchauffé par un dispositif chauffant.

4. Procédé selon une des revendications précédentes, **caractérisé en ce que** le liquide guidé à travers l'interstice de nettoyage (44) est refroidi par un dispositif de refroidissement.

5. Procédé selon une des revendications précédentes, **caractérisé en ce que** les surfaces de nettoyage (12, 42) des disques de nettoyage (10, 40) du dispositif présentent respectivement une pluralité de nervures de nettoyage (18, 46) s'étendant entre un bord intérieur et un bord extérieur des surfaces de nettoyage, au moins un flanc des nervures de nettoyage (18, 46) étant incliné ou courbé par rapport à la direction axiale du disque de nettoyage (10, 40) respectif, et **en ce que**, entre au moins quelques nervures de nettoyage (18, 46) voisines les unes des autres, il est disposé plusieurs entretoises de nettoyage (20, 48) placées transversalement par rapport à la direction d'étendue des nervures de nettoyage (18, 46) .

6. Procédé selon la revendication 5, **caractérisé en ce que** les flancs inclinés ou courbés des nervures de nettoyage (18, 46) du premier et/ou du deuxième disque de nettoyage (10, 40) sont les flancs qui précèdent lors d'une rotation du disque de nettoyage (10, 40) au moins au nombre de un.

7. Procédé selon une des revendications 5 ou 6, **caractérisé en ce que** l'intervalle entre les disques de nettoyage (10, 40) est réglé de telle sorte que, entre les surfaces sommitales (26) des nervures de nettoyage (18, 46) de la première surface de nettoyage et les surfaces sommitales (26) des nervures de nettoyage (18, 46) de la deuxième surface de nettoyage, il existe un intervalle qui correspond essentiellement à l'épaisseur moyenne des copeaux de matière plastique (56) amenés au moyen du dispositif d'amenée.

8. Procédé selon une des revendications précédentes, **caractérisé en ce que** les disques de nettoyage sont constitués de telle sorte qu'un effet de pompage d'assistance est produit.

9. Procédé selon une des revendications précédentes, **caractérisé en ce que**, avant leur amenée entre les disques de nettoyage (10, 40) et leur transport à travers l'interstice de nettoyage (44) du dispositif, des copeaux de matière plastique à nettoyer sont soumis à un pré-nettoyage dans un dispositif de pré-nettoyage, le dispositif de pré-nettoyage comprenant un premier disque de nettoyage avec une première surface de nettoyage et un deuxième disque de nettoyage avec une deuxième surface de nettoyage, les surfaces de nettoyage étant situées en face l'une de l'autre et délimitant entre elles un interstice de nettoyage qui est plus grand que l'interstice de nettoyage (44) du dispositif utilisé ensuite pour la suppression d'impuretés sur les copeaux de matière plastique.

10. Procédé selon la revendication 9, **caractérisé en ce que** l'interstice de nettoyage du dispositif de pré-nettoyage est choisi par le réglage de l'intervalle des disques de nettoyage de telle sorte que des impuretés supprimées au cours du pré-nettoyage des copeaux de matière plastique ne sont essentiellement pas détruites.

11. Procédé selon une des revendications 1 à 8, **caractérisé en ce que**, avant leur amenée entre les disques de nettoyage (10, 40) et leur transport travers l'interstice de nettoyage (44) du dispositif, des copeaux de matière plastique à nettoyer sont soumis à un pré-nettoyage dans un dispositif de pré-nettoyage, le dispositif de pré-nettoyage comprenant un cylindre creux de nettoyage avec une première surface de nettoyage sur sa surface intérieure cylindrique et un cylindre de nettoyage disposé dans le cylindre creux de nettoyage avec une deuxième surface de nettoyage sur sa surface extérieure cylindrique, les surfaces de nettoyage délimitant entre elles un interstice de nettoyage qui est plus grand que l'interstice de nettoyage (44) du dispositif utilisé ensuite pour la suppression d'impuretés sur les copeaux de matière plastique.

12. Procédé selon la revendication 11, **caractérisé en ce que** l'interstice de nettoyage du dispositif de pré-nettoyage est choisi par le réglage de l'intervalle entre le cylindre creux de nettoyage et le cylindre de nettoyage de telle sorte que des impuretés supprimées au cours du pré-nettoyage des copeaux de matière plastique ne sont essentiellement pas détruites.

13. Procédé selon une des revendications 1 à 8, **caractérisé en ce que**, avant leur amenée entre les disques de nettoyage (10, 40) et leur transport travers l'interstice de nettoyage (44) du dispositif, des copeaux de matière plastique à nettoyer sont soumis à un pré-nettoyage dans un dispositif de pré-nettoyage, le dispositif de pré-nettoyage comprenant un cône creux de nettoyage avec une première surface de nettoyage sur sa surface intérieure conique et un cône de nettoyage disposé dans le cône creux de nettoyage avec une deuxième surface de nettoyage sur sa surface extérieure conique, les surfaces de nettoyage délimitant entre elles un interstice de nettoyage qui est plus grand que l'interstice de nettoyage (44) du dispositif utilisé ensuite pour la suppression d'impuretés sur les copeaux de matière plastique.

14. Procédé selon la revendication 13, **caractérisé en ce que** l'interstice de nettoyage du dispositif de pré-nettoyage est choisi par le réglage de l'intervalle entre le cône creux de nettoyage et le cône de nettoyage de telle sorte que des impuretés supprimées au cours du pré-nettoyage des copeaux de matière plastique ne sont essentiellement pas détruites.

15. Procédé selon une des revendications 10, 12 ou 14, **caractérisé en ce que** les impuretés supprimées sont ensuite supprimées du liquide de process par filtration et/ou par tamisage.
